# EUROPEAN PATENT SPECIFICATION

(11) **EP 0 665 162 B1**
(45) Date of publication and mention of the grant of the patent: **08.04.1998**
(21) Application number: 94830029.8
(22) Date of filing: 28.01.1994
(51) Int. Cl.: B64G 1/00, B64G 1/64

(54) **Structural adaptor for the loading bay of a carrier rocket**
Strukturaler Adapter für den Laderaum einer Trägerrakete
Adaptateur structurel pour le compartiment de charge utile d'un lanceur

(43) Date of publication of application: 02.08.1995
(73) Proprietor: FINMECCANICA S.p.A., 00195 Roma (IT)
(72) Inventor: Bussolino, Luigi, I-15067 Novi Ligure (Alessandria) (IT); Pasta, Mario, I-10040 Cumiana (Torino) (IT)
(74) Representative: Quinterno, Giuseppe

(56) References cited:
- EP-A- 0 409 711
- WO-A-86/01484
- ESA BULLETIN, no.66, May 1991, NOORDWIJK NL pages 29 - 35 VALENTINY ET AL. 'THE HERMES MISSIONS AN OVERVIEW'
- AVIATION WEEK AND SPACE TECHNOLOGY, vol.124, no.23, June 1986, NEW YORK US pages 77 - 91 'EUROPEANS LOOKING BEYOND ARIANE 4 TO GOAL OF INDEPENDENCE IN SPACE'
- ZEITSCHRIFT FUR FLUGWISSENSCHAFTEN UND WELTRAUMFORSCHUNG, vol.16, no.1, February 1992, BONN DE pages 8 - 14 THOMAS ET AL. 'THE ARIANE TRANSFER VEHICLE'

## Description

The present invention relates to a structural adapter for the loading bay of a carrier rocket adapted to launch a pair of satellites, the adapter comprising a substantially cylindrical hollow body which has a first end to which a main satellite can be releasably connected and a second end, opposite the first end, for releasable connection to a service platform of the rocket, a subsidiary satellite being housable within the hollow body.

Structural adapters of the type indicated above are generally known by the letters S.P.I.L.M.A. (Structure Porteuse Interne Launcement Multiple Ariane namely Ariane Multiple-Launch Internal Carrier Structure) or S.P.E.L.T.R.A (Structure Porteuse Externe Launcement Triple Ariane , that is Ariane Triple-Launch External Carrier Structure) and enable a pair of satellites to be superposed on each other in the loading bay of a carrier rocket. These satellites can then be released separately when the final stage of the rocket, that having the loading bay, has reached a predetermined altitude.

When an adapter of the type defined above has exhausted its function of supporting at least one of the two satellites, it is abandoned in space and is destroyed during its fall back to earth under gravity in that, during the re-entry phase, it encounters denser atmospheric layers which cause high aerodynamic friction and a consequent production of heat.

Such structural adapters thus essentially fulfil only a passive support role and constitute a pay load of the carrier rocket which is intended to be destroyed.

The main object of the present invention is to provide a structural adapter of the type specified above which is able to carry out an active role as well as a passive, support role so as to increase the efficiency of the payload for each mission of the carrier rocket.

This object is achieved in accordance with the invention by virtue of the fact that the hollow body supports on-board equipment including electricity generating means, electrical energy storage means and members for supplying the electricity to equipment associated with the body, whereby the structural adapter can also assist one of the satellites during the fulfilment of at least part of its mission and/or can carry out independent space missions.

By virtue of these characteristics, the structural adapter which, in the past, was intended to carry out solely a passive function, can be used in accordance with the invention in an active manner in missions, both in assisting at least one of the satellites carried into orbit by the carrier rocket and in another role, such as for example, in observing and collecting data or in carrying out scientific experiments completely independently.

When the adapter is used to assist another satellite it is possible to reduce the quantity of subordinate equipment in the satellite assisted, thus making more space available for the subordinate apparatus for carrying out the mission. The subordinate equipment is thus preferably confined partly or totally to the structural adapter which may accompany the satellite for only a fraction of its mission, in particular when the equipment is needed, whereas in other phases of the satellite's mission when this subordinate equipment is not needed, for example during re-entry into the atmosphere, the satellite and the adapter are separated from each other.

The structural adapter can also carry out completely autonomous missions, for example immediately after the phase in which one of the satellites separates from it or at the end of the mission in which it assists one of the satellites, so that it itself constitutes a third satellite which occupies a space in the loading bay which previously was unavailable, with the advantage of increasing the useful load of the carrier rocket and hence reducing the overall cost of the entire mission.

The adapter according to the invention can also be used, to advantage, when the carrier rocket is intended to launch only one satellite as in the case, for example, where for reasons of urgency, it is not possible to find a second satellite for launching during the same mission and hence it is not possible to divide the costs of the mission as a whole between several users.

Both when the adapter carries out autonomous missions and when it assists a satellite, it may be attached, for part of the mission, to a service platform of that stage of the rocket provided with the loading bay containing the propulsion system (which can be switched on again).

Further characteristics and advantages of the present invention will become clearer from the detailed description which follows, given with reference to the appended drawings, provided purely by way of non-limiting example, in which:
Figure 1 is a side elevational view of a carrier rocket, the loading bay of which is partly open;
Figure 2 is a schematic perspective view of a structural adapter according to the invention;
Figures 3 and 4 are views similar to Figure 2 showing two embodiments of a variant of the invention; and
Figure 5 is a schematic perspective view of a structural adapter according to the invention in one possible configuration for carrying out a space mission.

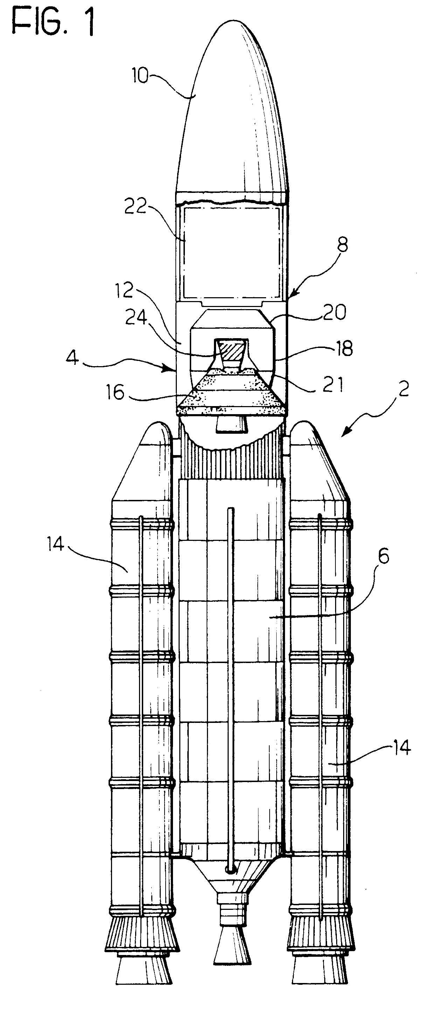

With reference initially to Figure 1, a multi-stage carrier rocket adapted to launch a pair of satellites is generally indicated 2.

The rocket 2 comprises a central body, or fuselage, 4 divided into a plurality of stages. A first stage 6, in known manner, houses a main motor connected to respective tanks for fuel and for combustion-assisting liquid. A pair of booster rockets, generally of the solid fuel type, are arranged symmetrically alongside the stage 6.

Above the stage 6 is a second stage 8 within which is a loading bay 12 of the rocket 2. Above the loading bay 12 is a head 10 having an ogival heat shield including for example, apparatus for controlling the direction of the rocket during the launch phase.

The stage 8 includes a service platform 16 having an independent propulsion unit which is connected releasably by known devices, for example explosive bolts, to a structural adapter 18 of substantially cylindrical shape defining a coaxial inner chamber. The structural adapter 18 is located entirely within the loading bay 12 and has an open lower end for its connection to the platform 16 and open upper end 20 of generally frusto- conical shape to which a main satellite 22, located above it within the bay 12, is releasably connected.

The chamber inside the adapter 18 passes right through from the end 20 to the end 21 and houses a subsidiary satellite 24 which may be supported directly by the service platform 16 or may be supported by the adapter 18 in a position spaced from the platform 16 by means of a connector element not illustrated in the drawings.

The adapter 18 is normally formed from light metal alloy or a composite material and has a plurality of lateral apertures 26, for example of circular shape, through which access may be gained to the interior during the phase preceding take off of the rocket 2. The outer surface of the adapter 18 preferably has solar photovoltaic cells for generating electricity.

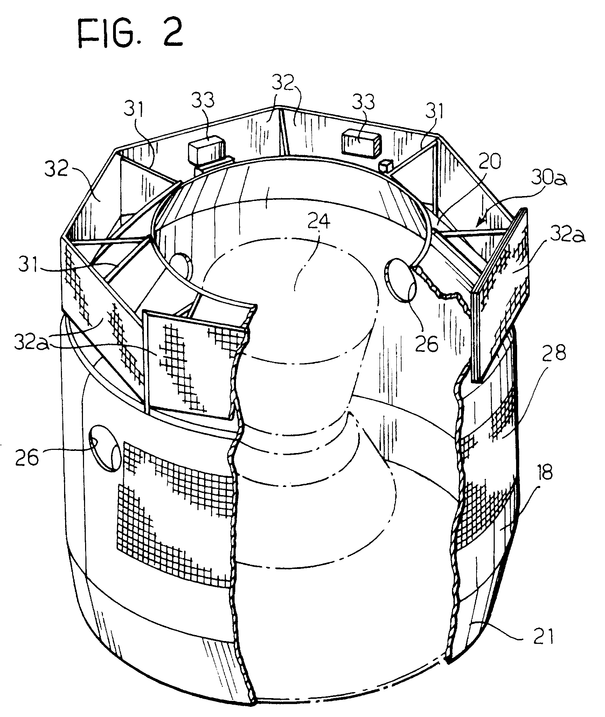

In a first variant of the invention illustrated in Figure 2, the adapter 18 has an outer support structure 30a located at its frusto-conical end 20. More particularly, a plurality of connector members 31, for example each of substantially triangular shape, is fixed to this end 20 in a generally radial configuration and supports panels 32.

The panels 32 have associated apparatus, or on-board equipment 33, for example for generating electricity, storing it and supplying it to other apparatus connected to the adapter 18 and/or to a satellite, for example the subsidiary satellite 24, assisted by the adapter 18. The panels 32 may also support outer panels 32a, for example of known type which can be unfolded, over which photo-voltaic cells are distributed. The panels 32 may also have associated standby batteries for supplying the apparatus when the photo-voltaic cells are not exposed to sunlight and/or fuel cells.

The apparatus 33 may also include sensors for sensing the attitude of the adaptor 18, for example of the solar, gyroscopic, magnetic or "star-plotting" type and a processor for receiving the attitude data collected by the sensors during the mission. In this case the adapter is generally provided with devices for controlling its attitude during the mission, for example secondary propulsion devices of conventional type, such as jet engines of the chemical or cold gas type, and/or magnetic or inertial wheel motors. Depending upon the purposes of the mission, the attitude of the adapter 18 could be stabilised precisely about three axes to maintain a predetermined attitude relative to a reference or could be rotated constantly about its general axis.

Instruments may also be provided for enabling a predetermined scientific mission to be carried out, for example for carrying out experiments in the absence of gravity or for supervising and acquiring data relating to celestial bodies. In this case the processor will supervise and control the instantaneous orientation of movable instruments associated therewith or with the satellite assisted.

Equipment may also be present for transmitting the data collected by the adapter or by the satellite assisted to earth or to other vehicles. Such transmission equipment would include, in known manner, a transponder, an antenna, and codifying and decodifying apparatus both for transmission and reception.

The processor can also check that all the equipment present is operating properly and can manage the situation in case of breakdowns, for example by activating back-up systems provided for this purpose.

The adapter will preferably be provided with heat-control elements, for example of the passive type, for insulating the on-board equipment thermally or for facilitating heat dissipation from the equipment which produces heat during its operation. Alternatively, heat-control devices of an active type may be used and, in this case, heat sensors and heating and/or cooling systems are provided and are controlled by the processor in response to data detected by the heat sensors.

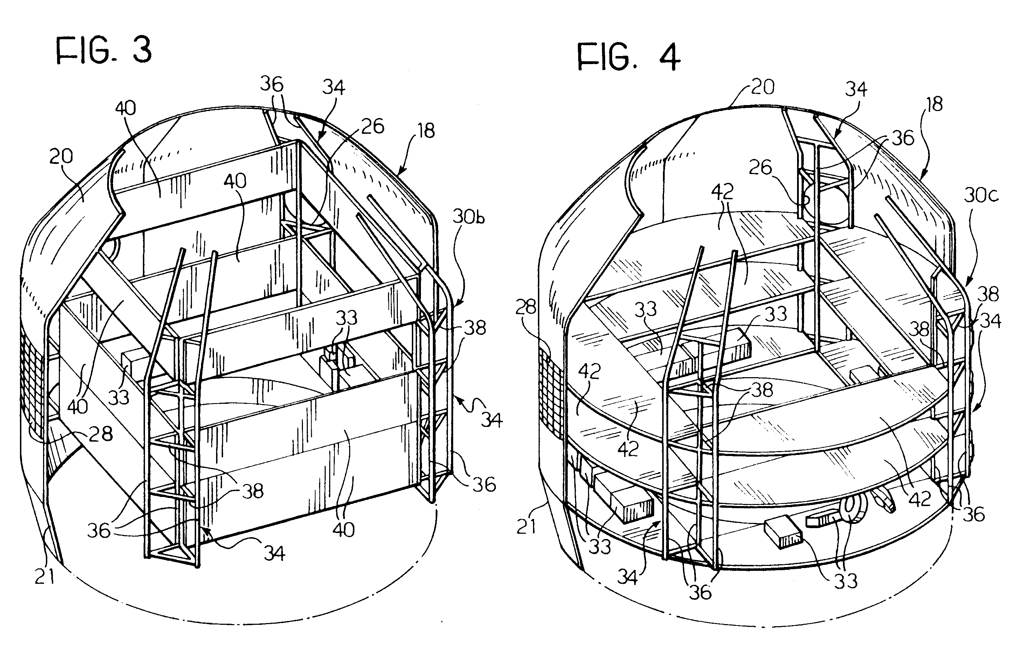

In one variant of the invention illustrated in Figures 2 and 3, in which elements the same as or similar to those described above are indicated by the same reference numerals, the adapter 18 includes internal support structures 30b or 30c for the on-board equipment.

Both of the structures 30b and 30c include a plurality of lattice elements 34, for example four radially equispaced around the inner wall of the adapter 18 and each extending in a direction substantially parallel to the general axis of the adapter 18. The lattice elements 24 each include, for example, three uprights 36 connected together by a plurality of triangular elements 38. In the case of the structure 30b, the upright 38 of each lattice element 34 which is located in the radially innermost position with respect to the adapter 18 has attached thereto a plurality of elongate panels 40 each of which extends in a plane parallel to the general axis of the adapter 18 between a pair of adjacent lattice elements 34. The equipment 33 is then attached to the faces of the panels 40 facing inwardly of the adapter 18. The panels 40 are arranged so as to leave free spaces, for example in correspondence with the apertures 26 in the adapter 18.

The support structure 30c also includes a plurality of panels 42 anchored to the elements 34 and extending traversely thereof.

Naturally both the structure 30b and the structure 30c are of such a size as to leave a coaxial through-chamber free within the adapter 18 to allow it to accommodate the subsidiary satellite 24.

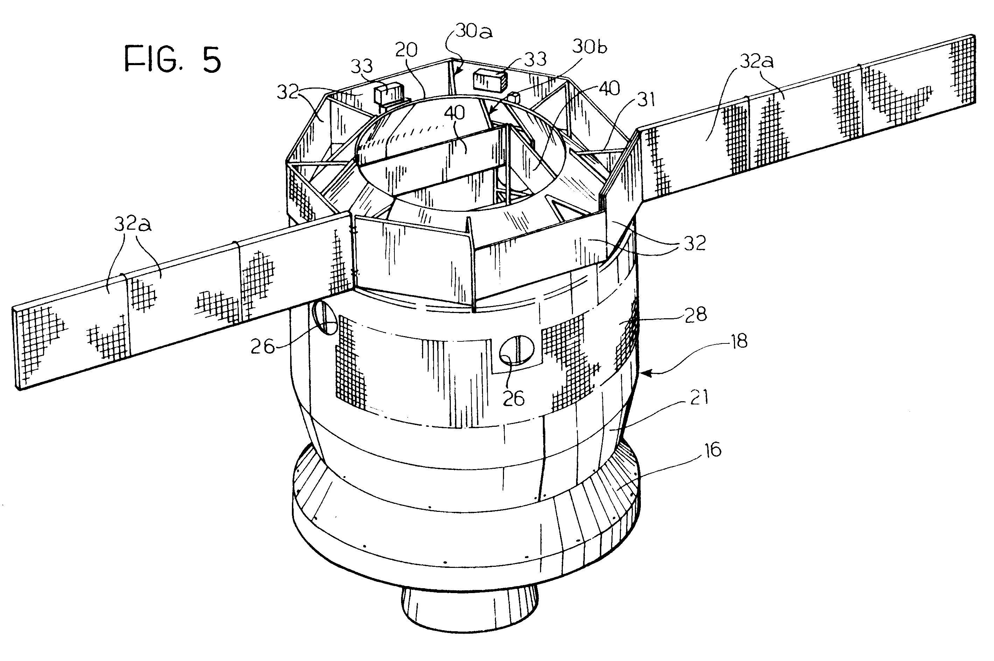

In the more general case, the adapter 18 may include both an outer support structure 30a and an inner support structure, for example 30b, as illustrated in Figure 5. In this case, in which the adapter 18 is illustrated in the configuration in which it is attached to the service platform 16 and with the photo-voltaic panels 32a in their unfolded configuration, part of the apparatus 33 will be attached to the panels 32 of the structure 30a and part to the panels 40 of the structure 30b.

In use, when the service platform 16 reaches the predetermined altitude, the first satellite is released, the stage 8 being open and the loading bay 12 having been left free after traversal of the upper layers of the atmosphere.

Subsequently, for example, the main satellite 22 separates from the adapter 18 and carries out its mission. In this case the service platform 16 remains connected to the adapter 18 and associated with the subsidiary satellite 24.

The adapter 18 may then continue with the subsidiary satellite 24, assisting it in part of its mission, together with the platform 16, for example supplying the satellite 24 with power and processing and transmitting data collected by the satellite and/or by the equipment of the adapter 18. At the end of this phase, the adapter 18 separates from the satellite 24 which carries out the predetermined operations for return to earth and the adapter 18 may be abandoned in space in an inactive condition or may carry out an autonomous mission.

Alternatively, immediately after the separation of the main satellite 22 from the adapter 18, the adapter 18 may detach itself from the platform 16, thus also separating from the satellite 24, to continue in a totally independent manner to carry out a predetermined mission. In this case the adapter 18 will carry out its mission as a completely independent satellite and the satellite 24 could, but need not, remain attached to the platform 16 for part of its mission and will in its turn be released when it has reached a predetermined altitude.

## Claims

1. A structural adapter for the loading bay (12) of a carrier rocket (2) adapted to launch a pair of satellites (22,24), the adapter (18) comprising a substantially cylindrical hollow body which has a first end (20) to which a main satellite (24) can be releasably connected and a second end (21), opposite the first end (20), for releasable connection to a service platform (16) of the rocket, a subsidiary satellite (24) being housable within the hollow body, characterised in that the hollow body supports on-board equipment (33) including electricity generating means (28,32a), electrical energy storage means and members for supplying the electricity to equipment (24,33) associated with the body, whereby the structural adapter (18) can also assist one of the satellites (22,24) during the fulfilment of at least part of its mission and/or can carry out independent space missions.

2. An adapter according to Claim 1, characterised in that the on-board equipment (33) includes photo-voltaic cells (28,32a) distributed over the outer surface of the body and connected to means for converting, controlling and distributing the current to the on-board apparatus.

3. An adapter according to Claim 1 or Claim 2, characterised in that the on-board equipment (33) includes means for collecting data relating to the attitude of the body and processor means for processing this data.

4. An adapter according to Claim 3, characterised in that the on-board equipment (33) includes propulsion and non-propulsion means controlled by the processor means for controlling the adapter attitude.

5. An adapter according to any one of Claims 1 to 4, characterised in that the on-board equipment (33) includes instruments relating to the carrying out of a mission.

6. An adapter according to claim 5, characterised in that the on-board equipment (33) includes means for transmitting data relating to the mission carried out and for receiving data or commands from earth.

7. An adapter according to any one of Claims 1 to 6, characterised in that the on-board equipment (33) includes means for controlling the temperature of the on-board equipment (33).

8. An adapter according to any one of Claims 1 to 7, characterised in that the processor means can control the on-board equipment (33).

9. An adapter according to any one of Claims 1 to 8, characterised in that it includes a support structure (30a;30b;30c) connected to the body for supporting the on-board equipment (33).

10. An adapter to Claim 9, characterised in that the support structure (30a) is fixed to the outside of the body.

11. An adapter according to Claim 10, characterised in that the support structure (30a) is fixed to one end (20) of the body which is generally frusto-conical in shape.

12. An adapter according to Claim 11, characterised in that the support structure (30a) includes connector members (31) for supporting panels (32,32a) arranged in a direction parallel to a general axis of the body.

13. An adapter according to Claim 9, characterised in that the support structure (30b;30c) is fixed inside the body.

14. An adapter according to Claim 13, characterised in that the support structure (30b;30c) includes a plurality of lattice elements (34) which are radially equispaced and extend substantially in a direction parallel to the general axis of the body close to its inner wall.

15. An adapter according to Claim 14, characterised in that the support structure (30b;30c) supports a plurality of panels (40;42) for the attachment of the on-board equipment (33).

16. An adapter according to Claim 15, characterised in that the panels (40) extend parallel to the lattice elements (34).

17. An adapter according to Claim 15, characterised in that the panels (42) extend transverse the lattice elements (34).

18. A satellite including a substantially cylindrical body for supporting on-board equipment (33), characterised in that a hollow region is defined within it coaxial with the body and shaped so as to contain another satellite (24).

19. A satellite according to Claim 18, characterised in that the hollow region traverses the body from one end (20) to the other (21).

## Patentansprüche

1. Struktur-Adapter für die Ladebucht (12) einer Trägerrakete (2), die geeignet ist ein Paar von Satelliten (22, 24) zu starten, wobei der Adapter (18) einen im wesentlichen zylindrischen, hohlen Körper umfaßt, der ein erstes Ende (20), mit dem ein Haupt-Satellit (24) lösbar verbunden ist und ein zweites Ende (21) gegenüber dem ersten (20) zur lösbaren Verbindung mit einer Service-Plattform (16) der Rakete aufweist, und ein Tochter-Satellit (24) innerhalb des hohlen Körpers unterbringbar ist, **dadurch gekennzeichnet**, daß der hohle Körper Bordausrüstung (33), einschließlich Elekrizitätserzeuger (28, 32a), Speicher für elektrische Energie und Teile zur Lieferung der Elektrizität zur dem Körper zugeordneten Ausrüstung (24, 33) trägt, wobei der Struktur-Adapter (18) auch einen der Satelliten (22, 24) während der Durchführung zumindest eines Teiles seiner Mission unterstützen und/oder eine unabhängige Raum-Mission ausführen kann.

2. Adapter nach Anspruch 1, **dadurch gekennzeichnet**, daß die Bordausrüstung (33) photovoltaische Zellen (28, 32a) einschließt, die über die Außenseite des Körpers verteilt sind und mit Einrichtungen zur Umwandlung, Steuerung und Verteilung des Stromes zu an Bord befindlichen Geräten verbunden sind.

3. Adapter nach Anspruch 1 oder 2, **dadurch gekennzeichnet**, daß die Bordausrüstung (33) Einrichtungen zum Sammeln von Daten bezüglich der Lage des Körpers und einen Prozessor zur Verarbeitung der Daten einschließt.

4. Adapter nach Anspruch 3, **dadurch gekennzeichnet**, daß die Bordausrüstung (33) Antriebs- und Nicht-Antriebseinrichtungen aufweist, die von dem Prozessor zur Steuerung der Lage des Adapters gesteuert sind.

5. Adapter nach einem der Ansprüche 1 bis 4, **dadurch gekennzeichnet**, daß die Bordausrüstung (33) Instrumente umfaßt die in Bezug zur Durchführung einer Mission stehen.

6. Adapter nach Anspruch 5, **dadurch gekennzeichnet**, daß die Bordausrüstung (33) Einrichtungen zur Übermittlung von in Bezug zur Durchführung der Mission stehenden Daten und zum Empfang von Daten und Befehlen von der Erde umfaßt.

7. Adapter nach einem der Ansprüche 1 bis 6, **dadurch gekennzeichnet**, daß die Bordausrüstung (33) Einrichtungen zur Steuerung der Temperatur der Bordausrüstung (33) aufweist.

8. Adapter nach einem der Ansprüche 1 bis 7, **dadurch gekennzeichnet**, daß der Prozessor die Bordausrüstung (33) steuert.

9. Adapter nach einem der Ansprüche 1 bis 8, **dadurch gekennzeichnet**, daß er eine Tragstruktur (30a, 30b, 30c) einschließt, die mit dem Körper verbunden ist und zum Tragen der Bordausrüstung (33) dient.

10. Adapter nach Anspruch 9, **dadurch gekennzeichnet**, daß die Tragstruktur (30a) an der Außenseite des Körpers fixiert ist.

11. Adapter nach Anspruch 10, **dadurch gekennzeichnet**, daß die Tragstruktur (30a) an einem Ende (20) des Körpers fixiert ist, das eine im wesentlichen kegelstumpf-förmige Gestalt aufweist.

12. Adapter nach Anspruch 11, **dadurch gekennzeichnet**, daß die Tragstruktur (30a) Verbinder (31) zum Unterstützen von Paneelen (32, 32a) aufweist, die in einer zur Hauptachse des Körpers parallelen Richtung angeordnet sind.

13. Adapter nach Anspruch 9, **dadurch gekennzeichnet**, daß die Tragstruktur (30b, 30c) innerhalb des Körpers befestigt ist.

14. Adapter nach Anspruch 13, **dadurch gekennzeichnet**, daß die Tragstruktur (30b, 30c) eine Vielzahl von Gitterelementen (34) einschließt, die radial äquidistant angeordnet sind und sich im wesentlichen in einer Richtung parallel zur Hauptachse des Körpers nahe der Innenwand des Körpers erstrecken.

15. Adapter nach Anspruch 14, **dadurch gekennzeichnet**, daß die Tragstruktur (30b; 30c) eine Vielzahl von Paneelen (40, 42) für die Anbringung der Bordausrüstung (33) trägt.

16. Adapter nach Anspruch 15, **dadurch gekennzeichnet**, daß sich die Paneele (40) parallel zu den Gitterelementen (34) erstrecken.

17. Adapter nach Anspruch 15, **dadurch gekennzeichnet**, daß sich die Paneele (42) quer zu den Gitterelementen (34) erstrecken.

18. Satellit, der einen im wesentlichen zylindrischen Körper zum Tragen der Bordausrüstung (33) einschließt, **dadurch gekennzeichnet**, daß in diesem ein hohler Bereich koaxial zum Körper definiert ist, der zur Aufnahme eines anderen Satelliten (24) gestaltet ist.

19. Satellit nach Anspruch 18, **dadurch gekennzeichnet**, daß der hohle Bereich den Körper von einem Ende (20) zum anderen (21) durchsetzt.

## Revendications

1. Adaptateur de structure pour l'aire de chargement (12) d'une fusée porteuse (2), adapté pour lancer une paire de satellites (22,24), l'adaptateur (18) comprenant un corps creux sensiblement cylindrique qui possède une première extrémité (20) à laquelle un satellite principal (24) peut être raccordé en vue de son largage et une deuxième extrémité (21), opposée à la première extrémité (20), destinée à assurer une liaison en vue d'un largage avec une plate-forme de service (16) de la fusée, un satellite secondaire (24) pouvant être logé à l'intérieur du corps creux, caractérisé en ce que le corps creux supporte des équipements de bord (33) comprenant des moyens de génération d'électricité (28, 32a), des moyens de stockage d'énergie électrique et des éléments pour envoyer l'électricité aux équipements (24,33), associés au corps, l'adaptateur de structure (18) pouvant ainsi également assister un des satellites (22,24) pendant la réalisation d'au moins une partie de sa mission et/ou effectuer des missions spatiales indépendantes.

2. Adaptateur selon la revendication 1, caractérisé en ce que les équipements de bord (33) comprennent des piles photovoltaïques (28, 32a) réparties sur la surface externe du corps et reliées à des moyens destinés à convertir, contrôler et distribuer le courant à l'appareil de bord.

3. Adaptateur selon la revendication 1 ou la revendication 2, caractérisé en ce que les équipements de bord (33) comprennent des moyens destinés à recueillir des données relatives à l'orientation du corps et un moyen formant processeur destiné à traiter ces données.

4. Adaptateur selon la revendication 3, caractérisé en ce que les équipements de bord (33) comprennent des moyens de propulsion et de non-propulsion commandés par le moyen formant processeur destiné à commander l'orientation de l'adaptateur.

5. Adaptateur selon l'une quelconque des revendications 1 à 4, caractérisé en ce que les équipements de bord (33) comprennent des instruments se rapportant à la réalisation d'une mission.

6. Adaptateur selon la revendication 5, caractérisé en ce que les équipements de bord (33) comprennent des moyens destinés à transmettre des données relatives à la mission accomplie et à recevoir des données ou commandes de la terre.

7. Adaptateur selon l'une quelconque des revendications 1 à 6, caractérisé en ce que les équipements de bord (33) comprennent des moyens destinés à contrôler la température des équipements de bord (33).

8. Adaptateur selon l'une quelconque des revendication 1 à 7, caractérisé en ce que le moyen formant processeur peut commander les équipements de bord (33).

9. Adaptateur selon l'une quelconque des revendication 1 à 8, caractérisé en ce qu'il comprend une structure (30a; 30b; 30c) formant support reliée au corps destinée à supporter les équipements de bord (33).

10. Adaptateur selon la revendication 9, caractérisé en ce que la structure (30a) formant support est fixée à l'extérieur du corps.

11. Adaptateur selon la revendication 10, caractérisé en ce que la structure (30a) formant support est fixée à une extrémité (20) du corps qui est généralement de forme tronconique.

12. Adaptateur selon la revendication 11, caractérisé en ce que la structure (30a) formant support comprend des éléments (31) d'assemblage pour supporter des panneaux (32, 32a) disposés dans une direction parallèle à un axe général du corps.

13. Adaptateur selon la revendication 9, caractérisé en ce que la structure (30b; 30c) formant support est fixée à l'intérieur du corps.

14. Adaptateur selon la revendication 13, caractérisé en ce que la structure (30b; 30c) formant support comprend une pluralité d'éléments (34) en treillis qui sont équidistants dans le sens radial et s'étendent sensiblement dans une direction parallèle à l'axe général du corps près de sa paroi interne.

15. Adaptateur selon la revendication 14, caractérisé en ce que la structure (30b; 30c) formant support supporte une pluralité de panneaux (40; 42) sur lesquels sont fixés les équipements de bord (33).

16. Adaptateur selon la revendication 15, caractérisé en ce que les panneaux (40) s'étendent parallèlement aux éléments (34) en treillis.

17. Adaptateur selon la revendication 15, caractérisé en ce que les panneaux (42) s'étendent transversalement par rapport aux éléments (34) en treillis.

18. Satellite comprenant un corps sensiblement cylindrique pour supporter des équipements de bord (33), caractérisé en ce qu'une zone creuse est définie à l'intérieur dans un sens coaxial par rapport au corps et formée de manière à contenir un autre satellite (24).

19. Satellite selon la revendication 18, caractérisé en ce que la région creuse traverse le corps d'une extrémité (20) à l'autre (21).
